Europäisches Patentamt

European Patent Office

Office européen des brevets

(19)

(11) **EP 1 303 143 A2**

(12) **DEMANDE DE BREVET EUROPEEN**

(43) Date de publication:
**16.04.2003 Bulletin 2003/16**

(51) Int Cl.⁷: **H04N 7/30**

(21) Numéro de dépôt: **02079156.2**

(22) Date de dépôt: **08.10.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **16.10.2001 FR 0113330**

(71) Demandeur: **Koninklijke Philips Electronics N.V.**
**5621 BA Eindhoven (NL)**

(72) Inventeurs:
• **Ruol, Vincent, Société Civile S.P.I.D.**
**75008 Paris (FR)**
• **Gesnot, Arnaud, Société Civile S.P.I.D.**
**75008 Paris (FR)**

(74) Mandataire: **Chaffraix, Jean**
**Société Civile S.P.I.D.**
**156, Boulevard Haussmann**
**75008 Paris (FR)**

(54) **Procédé de détection d'artefacts de bloc**

(57) La présente invention concerne un procédé de détection d'artefacts de bloc (10) à partir de données vidéo codées puis décodées selon une technique de codage par blocs. Ledit procédé comprend les étapes de calcul d'une première transformation discrète (1) d'un premier segment de données vidéo (11), de calcul d'une seconde transformation discrète (2) d'un second segment de données vidéo (12), ledit second segment étant adjacent au premier segment, et de calcul d'une transformation discrète (4) d'un segment concaténé de données vidéo (13) correspondant à la concaténation (3) des premier et second segments. Il comprend également une étape de calcul (5) d'un niveau (17) d'artefacts de bloc à partir du contenu des premier et second segments de données vidéo transformées (14,15), et du segment concaténé de données vidéo transformées (16). On obtient ainsi un procédé de détection d'artefacts de bloc pouvant être utilisé lors d'un post-traitement ou d'un codage des données vidéo.

FIG.1

## Description

### Domaine technique de l'invention

La présente invention concerne un procédé de détection d'artefacts de bloc à partir de données vidéo codées puis décodées selon une technique de codage par blocs.

Elle trouve notamment son application dans la compression vidéo, la technique de compression étant basée par exemple sur la norme MPEG (de l'anglais Moving Pictures Expert Group), en vue de corriger lesdits artefacts de bloc grâce, par exemple, à un post-traitement ou à un codage amélioré des données vidéo.

### Etat de la technique antérieure

Les algorithmes de compression vidéo utilisant des techniques de codage par blocs conduisent parfois à une dégradation de la qualité visuelle des images codées puis décodées. Un des artefacts visuels le plus couramment observé avec ces techniques de codage est appelé artefact de bloc. La dégradation de la qualité visuelle peut aller d'un niveau imperceptible à un niveau très gênant pour le téléspectateur selon le débit de codage utilisé. Ces artéfacts de bloc sont notamment dus à la quantification des blocs de coefficients DCT qui est d'autant plus grossière que le débit de codage est faible.

La demande de brevet internationale WO 01/20912 (référence interne : PHF99579) décrit un procédé de détection d'artefacts de bloc dans une image numérique contenant des pixels, ledit procédé comprenant les étapes de :

- filtrage gradient de valeurs de luminance desdits pixels, fournissant des données filtrées horizontales $y_h$ et verticales $y_v$,
- calcul de valeurs absolues $y_{ah}$ et $y_{av}$ des données filtrées,
- calcul de valeurs moyennes $\overline{xa_h}$ et $\overline{xa_v}$ des valeurs absolues,
- détection d'un artefact de bloc, ici un artefact vertical si :

$$\begin{cases} xa_h[n, j] > xa_h[n, j-1] + \dfrac{\overline{xa_h}}{2} \\ xa_h[n, j] > xa_h[n, j+1] + \dfrac{\overline{xa_h}}{2} \end{cases} \quad \forall n \in [i, i+k] \text{ avec k supérieur ou égal à 7.}$$

Une telle méthode présente cependant l'inconvénient, d'une part, de ne pas détecter tous les artefacts de bloc et, d'autre part, de conduire parfois à de fausses détections. De plus, elle ne détecte que des artefacts de bloc dont la taille est au moins de 8 pixels.

### Exposé de l'invention

La présente invention a pour but de proposer un procédé de détection d'artefacts de bloc qui soit à la fois plus fiable et plus précis.

A cet effet, le procédé de traitement de données vidéo selon l'invention est remarquable en ce qu'il comprend les étapes de :

- calcul d'une première transformation discrète d'un premier segment de données vidéo appartenant à un premier bloc,
- calcul d'une seconde transformation discrète d'un second segment de données vidéo appartenant à un second bloc, ledit second segment étant adjacent au premier segment,
- calcul d'une transformation discrète d'un segment concaténé de données vidéo correspondant à la concaténation des premier et second segments, et
- calcul d'un niveau d'artefacts de bloc, apte à déterminer une fréquence maximale prédite à partir des premier et second segments de données vidéo transformées, à déterminer un artefact de bloc élémentaire si une fréquence maximale réelle du segment concaténé de données vidéo transformées est supérieure à la fréquence maximale prédite, et à compter un nombre d'artefacts de bloc élémentaires pour un ensemble d'au moins un bloc.

Un tel procédé de traitement de données permet d'obtenir une granularité plus fine dans la détection d'artefacts de bloc. En effet, il autorise avec fiabilité la détection d'artefacts de bloc élémentaires correspondant à un segment d'un bloc, un bloc comprenant plusieurs segments horizontaux et verticaux. Puis, on obtient un niveau d'artefacts de bloc compris entre 0 et n, par exemple, pour un bloc de n lignes de m données vidéo si tous les segments horizontaux dudit bloc sont pris en compte, alors que la méthode de l'état de la technique antérieure ne donnait que des valeurs binaires correspondant soit à la présence, soit à l'absence d'un artefact de bloc dans ledit bloc.

La présente invention a également pour objet un dispositif de détection d'artefacts de bloc permettant de mettre en oeuvre ledit procédé de détection d'artefacts de bloc, dans un circuit intégré par exemple, à l'aide de moyens matériels (en anglais 'hardware') ou logiciels (en anglais 'software').

**Brève description des dessins**

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :

- la Fig. 1 donne une représentation schématique du procédé de détection d'artefacts de bloc selon l'invention,
- la Fig. 2 illustre deux segments adjacents disposés de part et d'autre d'une frontière séparant deux blocs,
- la Fig. 3 représente les artefacts de bloc potentiels pour un ensemble d'un bloc,
- la Fig. 4 représente les artefacts de bloc potentiels pour un ensemble de 4 blocs,
- la Fig. 5 donne une représentation schématique du procédé de post-traitement de données vidéo selon l'invention,
- la Fig. 6 donne une représentation schématique du procédé de codage de données vidéo selon l'invention, et
- la Fig. 7 donne trois exemples de modification d'un paramètre de pré-encodage selon ledit procédé de codage de données vidéo.

**Exposé détaillé d'au moins un mode de réalisation de l'invention**

La présente invention concerne un procédé de détection d'artefacts de bloc. Elle s'applique à tout signal vidéo contenant des données vidéo codées puis décodées selon une technique de codage par blocs. La technique de codage est, dans notre exemple, la norme MPEG mais peut être n'importe quelle autre technique de codage par blocs telle que, par exemple, les normes H.261 ou H.263 de l'Union Internationale des Télécommunications (ITU). Dans la suite de la description, les données vidéo sont préférentiellement les valeurs de luminance des pixels constituant une image numérique, mais il apparaîtra à l'homme du métier que des données vidéo telles que des valeurs de chrominance peuvent également être traitées par le procédé de détection d'artefacts de bloc.

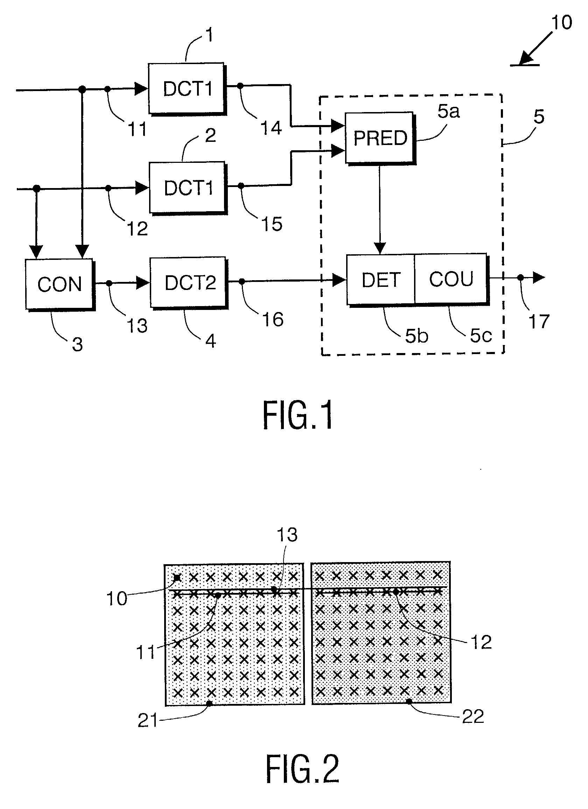

La Fig. 1 décrit un procédé de détection d'artefacts de bloc selon l'invention. Ledit procédé comprend les étapes suivantes.

Il comprend tout d'abord une étape de calcul d'une première transformation discrète DCT1 (1) d'un premier segment u (11) de N données vidéo (10) appartenant à un premier bloc (21), N étant un entier généralement égal à 8 dans le cas de données MPEG. Ces différents éléments sont représentés à la Fig. 2. Dans notre exemple, la transformation discrète est une transformation en cosinus discrète DCT mais il apparaîtra à l'homme du métier que la transformation discrète peut être n'importe quelle transformation de type Fourier. Le résultat de cette transformation discrète est un premier segment U (14) de données vidéo transformées, tel que :

$$U = DCT[u] = \{U(0), U(1), ..., U(N-1)\}, \text{ soit}$$

$$U(k) = \alpha(k) \sum_{n=0}^{N-1} u(n) \cos\left(\frac{\pi(2n+1)k}{2N}\right).$$

où k est la fréquence de la donnée transformée U, $k \in [0, N-1]$.

Le procédé de détection comprend également une étape de calcul d'une seconde transformation discrète DCT1 (2) d'un second segment de N données vidéo (12) appartenant à un second bloc (22), ledit second segment étant adjacent au premier segment. Le résultat de cette transformation discrète est un second segment V (15) de données vidéo transformées, tel que :

$$V = DCT(v) = \{V(0), V(1), ..., V(N-1)\}, \text{ soit}$$

$$V(k) = \alpha(k) \sum_{n=0}^{N-1} v(n) \cos\left(\frac{\pi(2n+1)k}{2N}\right).$$

Le procédé de détection comprend encore une étape de calcul d'une transformation discrète DCT2 (4) d'un segment concaténé de 2N données vidéo (13) correspondant à la concaténation CON (3) des premier et second segments. Le résultat de cette transformation discrète est un segment concaténé W (16) de données vidéo transformées, tel que :

W=DCT(w)={W(0), W(1), ..., W(2N-1)}, soit

$$W(k) = \frac{1}{\sqrt{2}} \alpha(k) \sum_{n=0}^{2N-1} w(n) \cos\left(\frac{\pi(2n+1)k}{4N}\right).$$

Le procédé de détection comprend enfin une étape de calcul (5) d'un niveau (17) d'artefacts de bloc en fonction du contenu des segments U, V et W de données vidéo transformées. Ladite étape de calcul comprend une première sous-étape de détermination PRED (5a) d'une fréquence maximale prédite kwpred à partir des fréquences maximales kumax et kvmax des premier et second segments U (14) et V (15) de données vidéo transformées (14,15) comme suit :

kwpred = 2.max( kumax, kvmax ) + 2

avec

kumax = max( k∈{0,...,N-1} / U(k) > T),

kvmax = max( k∈{0,...,N-1} / V(k) > T),

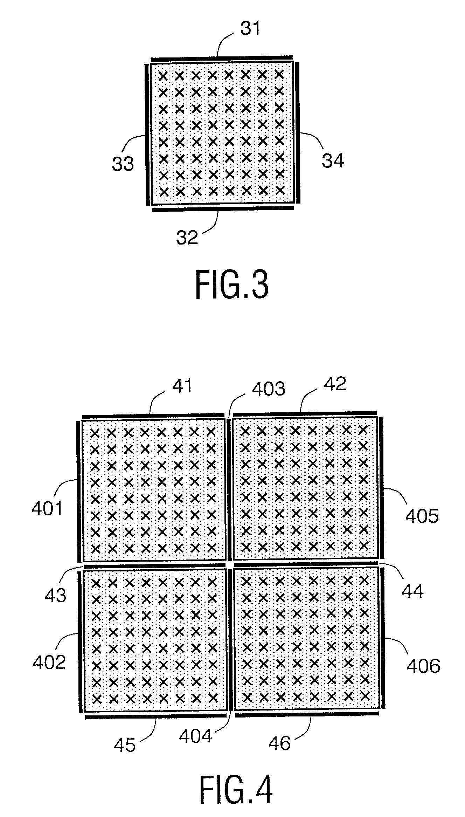

T est un seuil strictement supérieur à zéro, et
max est la fonction qui donne le maximum de k parmi un ensemble de valeurs déterminées.
L'étape de calcul du niveau d'artefacts de bloc comprend une seconde sous-étape de détermination DET (5b) d'un artefact de bloc élémentaire si la fréquence maximale réelle kwmax = max( k∈{0,...,2N-1} / W(k) > T) du segment concaténé W (16) de données vidéo transformées est strictement supérieure à la fréquence maximale prédite kwpred. L'étape de calcul de niveau d'artefacts de bloc comprend finalement une troisième sous-étape de comptage COU (5c) d'un nombre d'artefacts de bloc élémentaires pour un ensemble d'au moins un bloc afin de déterminer le niveau L d'artefacts de bloc (17).
Dans un mode de réalisation particulièrement avantageux, l'ensemble d'au moins un bloc est constitué par un bloc MPEG de 8 x 8 données vidéo. Les artefacts de bloc élémentaires potentiels sont répartis à la périphérie du bloc MPEG selon le schéma de la Fig. 3. Il peut s'agir d'artefacts de bloc horizontaux (31,32) ou verticaux (33,34). Ainsi, le nombre d'artefacts de bloc élémentaires, donc le niveau L d'artefacts de bloc, est compris dans ce cas entre 0 et 32. Si un bloc est situé en bordure d'image, par exemple en haut et à gauche de l'image, la méthode ne peut détecter certains artefacts de bloc élémentaires, les artefacts de bloc horizontaux situés au-dessus du bloc et verticaux situés à gauche du bloc dans le même exemple. La valeur d'artefacts de bloc élémentaire de ces bordures est mise à zéro. Il est également possible d'utiliser un effet miroir et de donner à ladite valeur d'artefact de bloc élémentaire une valeur identique à celle de l'artefact de bloc élémentaire symétrique. Dans le mode de réalisation préféré, l'ensemble d'au moins un bloc est constitué par un macrobloc MPEG de 16 x 16 données vidéo, soit 4 blocs MPEG. Les artefacts de bloc élémentaires potentiels sont répartis à la périphérie des blocs MPEG selon le schéma de la Fig. 4. Il peut s'agir d'artefacts de bloc horizontaux (41 à 46) ou verticaux (401 à 406). Ainsi, le nombre d'artefacts de bloc élémentaires, donc le niveau L d'artefacts de bloc, est compris dans ce cas entre 0 et 96, ce qui permet d'avoir une mesure plus fine. Pour une image numérique pleine résolution (576 lignes de 720 pixels), il est alors possible de construire une carte représentant les niveaux d'artefacts de bloc, cette carte correspondant à une matrice L(i,j) de 36 lignes par 45 colonnes dont les coefficients sont compris entre 0 et 96. Il apparaîtra à l'homme du métier que d'autres modes de réalisation peuvent être intéressants, comme, par exemple, ceux consistant à délivrer d'une part des niveaux d'artefacts de bloc horizontaux et d'autre part des niveaux d'artefacts de bloc verticaux, résultant ainsi en deux cartes, une carte représentant les niveaux d'artefacts de bloc horizontaux et une carte représentant les niveaux d'artefacts de bloc verticaux. Il est également possible de prendre en compte seulement certains types d'artefacts de bloc (artefacts horizontaux à droite d'un bloc par exemple) ou seulement certains segments d'un bloc (1 segment sur 2 par exemple), sans sortir pour autant du cadre de la présente invention.

Le procédé de détection d'artefacts de bloc peut être mis en oeuvre, dans un circuit intégré par exemple, grâce à des moyens matériels ou logiciels ou une combinaison des deux.

A titre d'exemple d'implémentation matérielle, le dispositif de détection d'artefacts de bloc comprend des circuits réalisant chacun une étape du procédé de détection d'artefacts de bloc précédemment décrit, les circuits de calcul de transformation en cosinus discrète DCT étant notamment connus de l'homme du métier. Ledit dispositif comprend alors :

- un circuit de calcul d'une première transformation discrète (1) d'un premier segment de données vidéo (11) appartenant à un premier bloc,
- un circuit de calcul d'une seconde transformation discrète (2) d'un second segment de données vidéo (12) appartenant à un second bloc, ledit second segment étant adjacent au premier segment,
- un circuit de calcul d'une transformation discrète (4) d'un segment concaténé de données vidéo (13) correspondant à la concaténation (3) des premier et second segments, et
- un circuit de calcul (5) d'un niveau (17) d'artefacts de bloc, apte à déterminer (5a) une fréquence maximale prédite à partir des premier et second segments de données vidéo transformées (14,15), à déterminer (5b) un artefact de bloc élémentaire si une fréquence maximale réelle du segment concaténé de données vidéo transformées (16) est supérieure à la fréquence maximale prédite, et à compter (5c) un nombre d'artefacts de bloc élémentaires pour un ensemble d'au moins un bloc.

Il est également possible d'implémenter les étapes du procédé de détection d'artéfacts de blocs au moyen d'un circuit convenablement programmé. Un jeu d'instructions contenu dans une mémoire de programmation peut provoquer le circuit à effectuer les différentes étapes du procédé de détection d'artefacts de bloc précédemment décrit. Le jeu d'instructions peut aussi être chargé dans la mémoire de programmation par la lecture d'un support de données comme, par exemple un disque qui contient le jeu d'instructions. La lecture peut également s'effectuer par l'intermédiaire d'un réseau de communication comme, par exemple, le réseau internet. Dans ce cas, un fournisseur de service mettra le jeu d'instructions à la disposition des intéressés.

Le procédé de détection d'artefacts de bloc trouve de nombreuses applications parmi lesquelles on peut citer le post-traitement et surtout le codage ou compression de données vidéo.

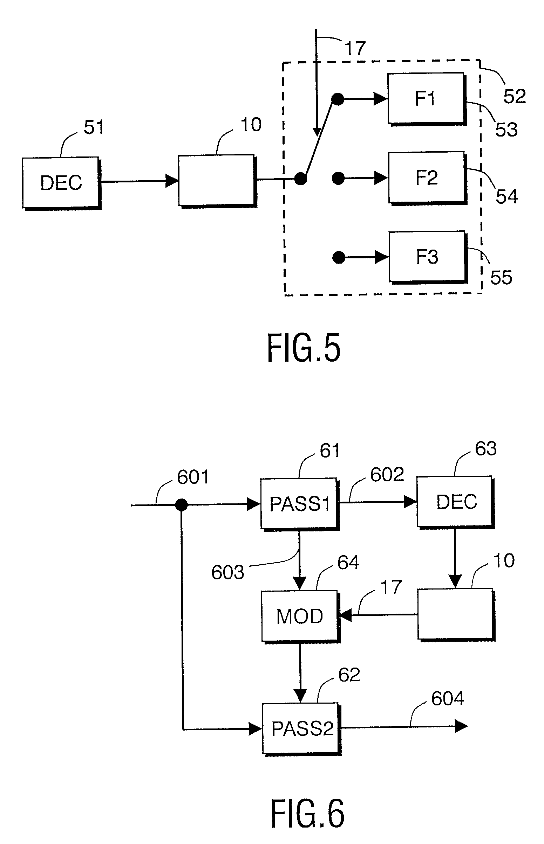

Un procédé de post-traitement de données vidéo selon l'invention est décrit à la Fig. 5. Il comprend le procédé de détection d'artefacts de bloc (10) précédemment décrit apte à réaliser au moins une carte de niveaux d'artefact de blocs à partir d'un flux de données vidéo codées puis préalablement décodées (51). Il comprend également une étape de filtrage (52) apte à appliquer un filtre parmi un ensemble de filtres (53,54,55) à l'ensemble d'au moins un bloc selon son niveau d'artefacts de bloc (17), et résultant en un flux de données vidéo filtrées. La présente invention concerne également le dispositif de post-traitement permettant de mettre en oeuvre ledit procédé de post-traitement.

Dans le mode de réalisation préféré, où l'ensemble d'au moins un bloc est constitué par un macrobloc MPEG de 16 x 16 données vidéo, soit 4 blocs MPEG, 3 types de filtrage ont été définis. Pour un niveau d'artefacts de bloc inférieur à un premier seuil prédéterminé T1 (32 par exemple si 96 niveaux sont possibles), un filtrage doux est appliqué, à l'aide, par exemple, d'un filtre F1 : 1/64 [1 4 54 4 1]. Puis pour un niveau d'artefacts de bloc compris entre le premier seuil prédéterminé T1 et un second seuil prédéterminé T2 (64 par exemple), un filtrage plus fort est appliqué, à l'aide, par exemple, d'un filtre F2 : 1/32[1 4 22 4 1]. Enfin, pour un niveau d'artefacts de bloc supérieur au second seuil prédéterminé T2, un filtrage fort est appliqué, à l'aide, par exemple, d'un filtre F3 : 1/16[1 4 6 4 1]. De préférence, seules les données vidéo le long d'une frontière de bloc sont filtrées. Si deux données vidéo de part et d'autre d'une frontière de bloc correspondent à des filtres différents, le filtrage le plus doux est de préférence choisi. Il va de soi qu'un autre découpage de la gamme des niveaux d'artefacts de bloc, de même qu'un autre choix des filtres est possible.

Un procédé de codage de données vidéo selon l'invention est également décrit à la Fig. 6. Il comprend une étape de pré-encodage PASS1 (61) de données vidéo (601) correspondant à une image ou à une trame, ladite étape étant effectuée avec un pas de quantification q constant selon un principe connu de l'homme du métier. De cette étape de pré-encodage résulte un flux de données vidéo codées intermédiaire (602) et des paramètres de pré-encodage (603) comme, par exemple, le nombre de bits utilisés pour pré-encoder les macro-blocs de l'image. Ces paramètres de pré-encodage sont ensuite utilisés lors de l'étape de codage PASS2 (62) des données vidéo (601) qui délivre un flux de données vidéo codées final (604) selon un principe connu de l'homme du métier.

Selon la présente invention, le flux de données vidéo codées est décodé (63) et le procédé de détection d'artefacts de bloc (10) précédemment décrit est appliqué à l'image ou trame ainsi décodée, résultant en au moins une carte de niveaux d'artefacts de bloc (17). Un ou plusieurs des paramètres de pré-encodage correspondant à l'ensemble d'au moins un bloc est alors modifié (64) selon son niveau d'artefacts de bloc.

Dans le mode de réalisation préféré, la complexité $X(i,j)$ issue de l'étape de pré-encodage, égale au produit du pas de quantification par le nombre de bits utilisés pour le codage, et correspondant à un macro-bloc de position $(i,j)$ dans l'image est modifié comme suit, résultant en une complexité modifiée $Y(i,j)$ :

$$Y(i,j) = C(L(i,j)) \cdot X(i,j)$$

où C est un coefficient qui dépend du niveau d'artefacts de bloc $L(i,j)$.

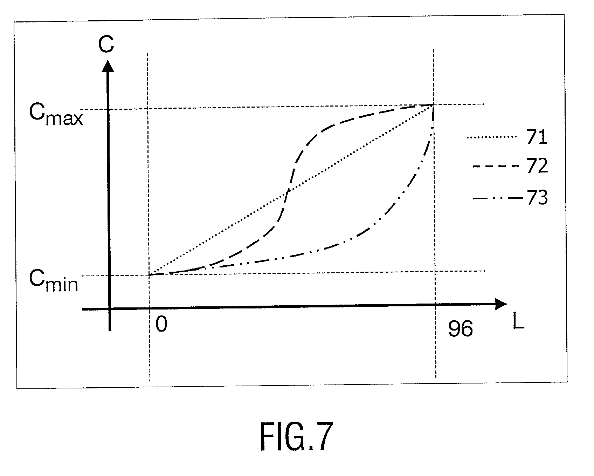

La Fig. 7 donne trois exemples de variations du coefficient C en fonction du niveau L d'artefacts de bloc, une variation linéaire (71) et deux variations non-linéaires (72,73) entre deux bornes Cmin et Cmax, égales respectivement à 1 et 2 par exemple.

La présente invention concerne également le dispositif de codage permettant de mettre en oeuvre ledit procédé de codage.

Aucun signe de référence entre parenthèses dans le présent texte ne doit être interprété de façon limitative. Le verbe "comprendre" et ses conjugaisons doivent également être interprétés de façon large, c'est à dire comme n'excluant pas la présence non seulement d'autres éléments ou étapes que ceux listés après ledit verbe, mais aussi d'une pluralité d'éléments ou d'étapes déjà listés après ledit verbe et précédés du mot "un" ou "une".

**Revendications**

1. Procédé de détection d'artefacts de bloc (10) à partir de données vidéo codées puis décodées selon une technique de codage par blocs, **caractérisé en ce que** ledit procédé comprend les étapes de :

   - calcul d'une première transformation discrète (1) d'un premier segment de données vidéo (11) appartenant à un premier bloc,
   - calcul d'une seconde transformation discrète (2) d'un second segment de données vidéo (12) appartenant à un second bloc, ledit second segment étant adjacent au premier segment,
   - calcul d'une transformation discrète (4) d'un segment concaténé de données vidéo (13) correspondant à la concaténation (3) des premier et second segments, et
   - calcul (5) d'un niveau (17) d'artefacts de bloc, apte à déterminer (5a) une fréquence maximale prédite à partir des premier et second segments de données vidéo transformées (14,15), à déterminer (5b) un artefact de bloc élémentaire si une fréquence maximale réelle du segment concaténé de données vidéo transformées (16) est supérieure à la fréquence maximale prédite, et à compter (5c) un nombre d'artefacts de bloc élémentaires pour un ensemble d'au moins un bloc.

2. Procédé de codage de données vidéo comprenant une étape de pré-encodage (61), une étape de décodage (63), un procédé de détection d'artefacts de bloc (10) selon la revendication 1, à partir des données vidéo pré-encodées puis décodées, ainsi qu'une étape de modification d'au moins un paramètre de pré-encodage correspondant à l'ensemble d'au moins un bloc selon le niveau d'artefacts de bloc (17) dudit ensemble.

3. Procédé de post-traitement de données vidéo comprenant un procédé de détection d'artefacts de bloc (10) selon la revendication 1, ainsi qu'une étape de filtrage (52) apte à appliquer un filtre parmi un ensemble de filtres (53,54,55) à l'ensemble d'au moins un bloc selon son niveau d'artefacts de bloc (17).

4. Dispositif de détection d'artefacts de bloc (10) à partir de données vidéo codées puis décodées selon une technique de codage par blocs, **caractérisé en ce que** ledit dispositif comprend :

   - des moyens de calcul d'une première transformation discrète (1) d'un premier segment de données vidéo (11) appartenant à un premier bloc,
   - des moyens de calcul d'une seconde transformation discrète (2) d'un second segment de données vidéo (12) appartenant à un second bloc, ledit second segment étant adjacent au premier segment,
   - des moyens de calcul d'une transformation discrète (4) d'un segment concaténé de données vidéo (13) correspondant à la concaténation (3) des premier et second segments, et

- des moyens de calcul (5) d'un niveau (17) d'artefacts de bloc, apte à déterminer (5a) une fréquence maximale prédite à partir des premier et second segments de données vidéo transformées (14,15), à déterminer (5b) un artefact de bloc élémentaire si une fréquence maximale réelle du segment concaténé de données vidéo transformées (16) est supérieure à la fréquence maximale prédite, et à compter (5c) un nombre d'artefacts de bloc élémentaires pour un ensemble d'au moins un bloc.

5. Dispositif de codage de données vidéo comprenant une unité de pré-encodage (61), une unité de décodage (63), un dispositif de détection d'artefacts de bloc (10) selon la revendication 4, à partir des données vidéo pré-encodées puis décodées, ainsi que des moyens de modification d'au moins un paramètre de pré-encodage correspondant à l'ensemble d'au moins un bloc selon le niveau d'artefacts de bloc (17) dudit ensemble.

6. Dispositif de post-traitement de données vidéo comprenant un dispositif de détection d'artefacts de bloc (10) selon la revendication 4, ainsi qu'une unité de filtrage (52) apte à appliquer un filtre parmi un ensemble de filtres (53,54,55) à l'ensemble d'au moins un bloc selon son niveau d'artefacts de bloc (17).

7. Produit "programme d'ordinateur" notamment pour codeur de données vidéo comprenant un jeu d'instructions qui, lorsqu'elles sont chargées dans un circuit de traitement de données dudit codeur vidéo, amène ledit circuit à effectuer le procédé de détection d'artefacts de bloc selon la revendication 1.

FIG.1

FIG.2

FIG.3

FIG.4

FIG.5

FIG.6

FIG.7